# FASCICULE DE BREVET EUROPEEN

(11) **EP 4 590 939 B1**
(45) Date de publication et mention de la délivrance du brevet: **22.07.2026**
(21) Numéro de dépôt: 23790047.7
(22) Date de dépôt: 19.09.2023
(51) Int. Cl.: F01D 11/00, F16J 15/30, F01D 25/16, F01D 25/18, F16J 15/34

(54) **DISPOSITIF D'ÉTANCHÉITÉ ET TURBOMACHINE COMPRENANT LE DISPOSITIF D'ÉTANCHÉITÉ**
DICHTUNGSVORRICHTUNG UND TURBOMASCHINE MIT DER DICHTUNGSVORRICHTUNG
SEALING DEVICE AND TURBOMACHINE COMPRISING THE SEALING DEVICE

(30) Priorité: 20.09.2022 FR 2209496
(43) Date de publication de la demande: 30.07.2025
(73) Titulaire: SAFRAN AIRCRAFT ENGINES, 75015 Paris (FR)
(72) Inventeur: LEGRAND, David, Roger, Pierre, 77550 MOISSY-CRAMAYEL (FR); DAHITE, Samia, 77550 MOISSY-CRAMAYEL (FR); SIMONOTTI, Hervé, 77550 MOISSY-CRAMAYEL (FR)
(74) Mandataire: Ernest Gutmann - Yves Plasseraud S.A.S.
(86) Numéro de dépôt international: PCT/FR2023/051431
(87) Numéro de publication internationale: WO 2024/062189

(56) Documents cités:
- EP-A1- 3 415 723
- US-A- 4 211 424
- US-A- 5 558 341
- US-A1- 2019 017 605

## Description

### Domaine de la divulgation

La présente divulgation concerne un dispositif d'étanchéité et une turbomachine comprenant le dispositif d'étanchéité. Plus particulièrement, le dispositif d'étanchéité est destiné à assurer l'étanchéité entre un arbre et une paroi de séparation séparant un premier logement et d'un deuxième logement.

### Etat de la technique

Dans une turbomachine, de multiples étanchéités doivent être assurées, le premier logement pouvant être destiné à contenir de l'air et le deuxième logement pouvant être destiné à contenir uniquement de l'air ou un mélange d'air et d'huile. L'étanchéité peut notamment viser à empêcher que l'huile passe d'un logement à l'autre, mais aussi à assurer une différence de pression à un niveau souhaité entre le premier logement et le deuxième logement. Il n'est généralement pas possible d'assurer une étanchéité parfaite et il n'est même pas toujours souhaité d'assurer une étanchéité parfaite. La présente divulgation vise à faciliter la gestion de l'étanchéité.

Il est décrit dans le document EP 0 387 122 A1, un dispositif d'étanchéité comprenant :
une bague, la bague présente une forme sensiblement annulaire s'étendant autour d'un axe de révolution s'étendant suivant une direction longitudinale, la bague comprend une lèvre d'étanchéité principale et une lèvre d'étanchéité secondaire, la lèvre d'étanchéité principale présente une surface interne configurée pour venir radialement au contact d'une surface annulaire d'un arbre, la lèvre d'étanchéité secondaire présente une surface radiale s'étendant perpendiculairement à la direction longitudinale, et
un carter, le carter est configuré pour être maintenu de manière étanche par rapport à une paroi de séparation, le carter comprend une portion cylindrique et une portion radiale, la portion cylindrique s'étend suivant la direction longitudinale autour de la bague, la portion radiale présente une surface de contact s'étendant perpendiculairement à la direction longitudinale, la bague est sollicitée pour appliquer la surface radiale de la lèvre d'étanchéité secondaire contre la surface de contact du carter. Un autre exemple de dispositif d'étanchéité est divulgué dans la demande de brevet US5558341A.

### Exposé de la divulgation

Conformément à la divulgation, le dispositif d'étanchéité présente au moins un passage de fuite formant communication entre le premier logement et le deuxième logement, l'au moins un passage de fuite s'étendant entre la lèvre d'étanchéité secondaire et la surface radiale du carter.

Ainsi, lorsqu'un dispositif d'étanchéité conçu et développé pour assurer une étanchéité élevée à un endroit donné a donné satisfaction, la création d'un passage de fuite permet de l'adapter efficacement pour assurer une étanchéité moins élevée à un autre endroit de la turbomachine. Le même raisonnement vaut également pour l'adaptation à une turbomachine ou un autre dispositif.

De plus, la lèvre d'étanchéité secondaire et le carter n'a guère de mouvements relatifs, uniquement des vibrations de faible amplitude puisqu'ils sont sensiblement fixes, contrairement à l'arbre qui est mobile en rotation autour de l'axe de révolution. L'usure de la lèvre d'étanchéité et du carter du fait du contact entre la surface radiale et la surface de contact est donc faible. Le passage de fuite évolue par conséquent peu au cours de l'utilisation.

Selon une autre caractéristique conforme à la divulgation, la bague présente au moins une rainure formée dans la lèvre d'étanchéité secondaire et formant l'au moins un passage de fuite.

La lèvre d'étanchéité secondaire présente généralement une résistance à l'usure plus élevée que la lèvre d'étanchéité principale. Ainsi, le passage de fuite évolue moins dans le temps.

Dans divers modes de réalisation du dispositif d'étanchéité selon la divulgation, on peut éventuellement avoir recours en outre à l'une et/ou à l'autre des dispositions suivantes :
- la bague comprend une pluralité de segments formant chacun une portion de cercle ;
- l'au moins un passage de fuite présente une profondeur comprise entre 0,1 et 1 mm suivant la direction longitudinale ;
- le dispositif d'étanchéité comprend entre 3 et 15 passages de fuite ;
- l'au moins un passage de fuite s'étend perpendiculairement à la direction longitudinale ;
- l'au moins un passage de fuite présente une section rectangulaire ;
- l'au moins un passage de fuite présente une section semi-circulaire ;
- l'au moins un passage de fuite présente une section triangulaire ;
- l'au moins un passage de fuite présente une section ondulée.

La présente divulgation concerne en outre une turbomachine comprenant le dispositif d'étanchéité.

### Brève description des figures

D'autres caractéristiques et avantages de la présente divulgation apparaîtront dans la description détaillée suivante, se référant aux dessins annexés dans lesquels :
[[Fig. 1] représente schématiquement une turbomachine comprenant un dispositif d'étanchéité,

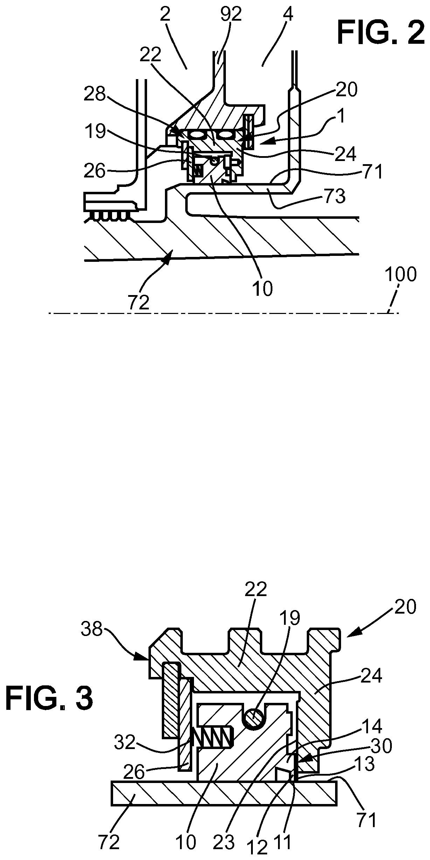

[Fig. 2] représente à échelle agrandie la zone repérée II à la figure 1 et en particulier le dispositif d'étanchéité selon un premier mode de réalisation comprenant une pluralité de segments circulaires,
[Fig. 3] représente à échelle encore agrandie le dispositif d'étanchéité selon le premier mode de réalisation,
[Fig. 4] représente en perspective l'un des segments circulaires du dispositif d'étanchéité selon le premier mode de réalisation,
[Fig. 5] est une vue selon la flèche repérée V à la figure 4,
[Fig. 6] illustre une première variante du premier mode de réalisation, conformément à la figure 5,
[Fig. 7] illustre une deuxième variante du premier mode de réalisation, conformément à la figure 5,

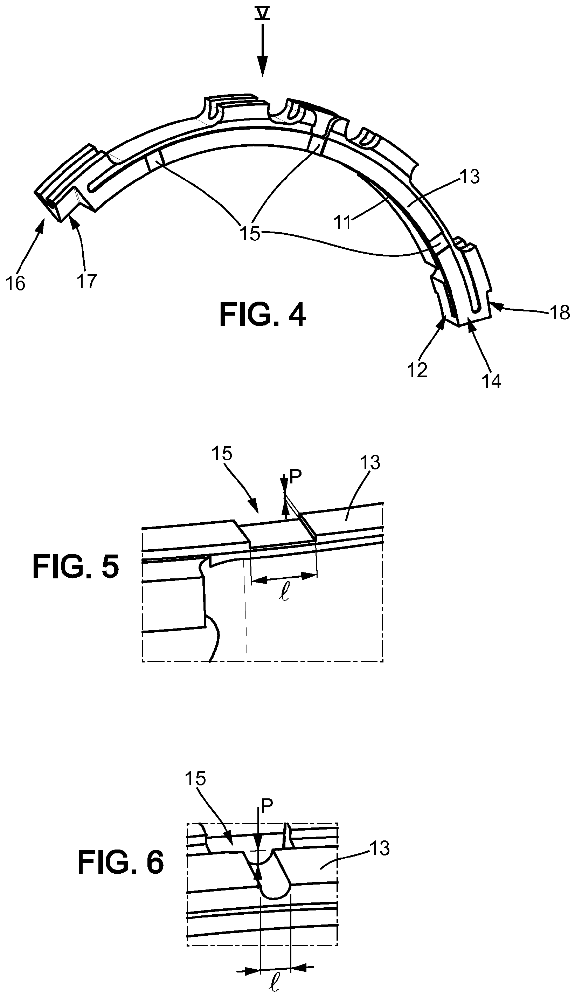

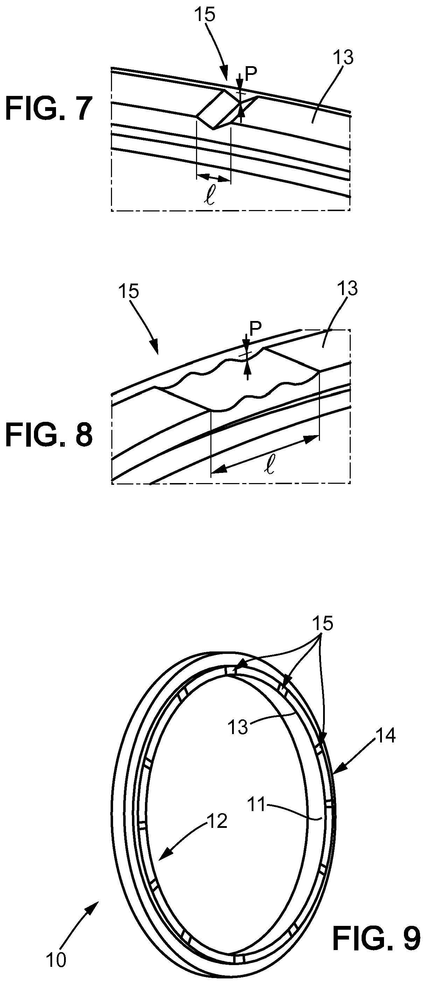

[Fig. 7] illustre une troisième variante du premier mode de réalisation, conformément à la figure 5,
[Fig. 8] illustre une bague monobloc selon un deuxième mode de réalisation du dispositif d'étanchéité.

### Description détaillée de la divulgation

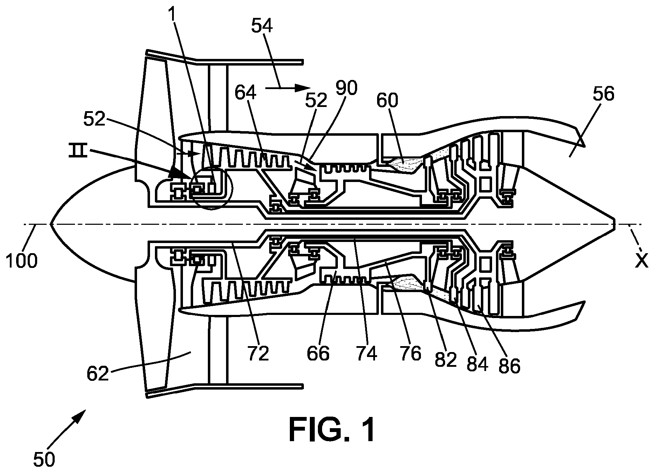

La figure 1 représente une turbomachine 50 comprenant un dispositif d'étanchéité 1. L'air entrant dans la turbomachine 50 traverse une soufflante 62, puis se sépare en un flux primaire 52 et un flux secondaire 54.

Le flux primaire 52 traverse successivement un ensemble de compresseurs une chambre de combustion 60, puis un ensemble de turbines. Dans le mode de réalisation illustré, l'ensemble de compresseurs comprend un compresseur basse pression 64 et un compresseur haute pression 66, et l'ensemble de turbine comprend une première turbine 82, une deuxième turbine 84 et une troisième turbine 86. La soufflante 62 est reliée à la troisième turbine 86 qui l'entraine en rotation par l'intermédiaire d'un premier arbre de liaison 72 autour d'un axe de révolution 100 par rapport à un stator 90. Le compresseur basse pression 64 est relié à la deuxième turbine 84 qui l'entraine en rotation par l'intermédiaire d'un deuxième arbre de liaison 74 autour de l'axe de révolution 100 par rapport au stator 90. Le compresseur haute pression 66 est relié à la première turbine 82 qui l'entraine en rotation par l'intermédiaire d'un troisième arbre de liaison 76 autour de l'axe de révolution 100 par rapport au stator 90.

La chambre de combustion 60 est alimentée en carburant qui est brulé dans le flux primaire 52. Les gaz de combustion forment un flux de sortie 56 en aval de la chambre de combustion 60. Le flux de sortie 56 passe à travers la première turbine 82, la deuxième turbine 84 et la troisième turbine 86. La troisième turbine 86 comprend plusieurs étages comportant chacun un distributeur et un rotor.

Le dispositif d'étanchéité 1 réalise l'étanchéité entre un premier logement 2 et un deuxième logement 4. Une paroi de séparation 92 du stator sépare le premier logement 2 et le deuxième logement 4.

Le premier arbre 72 comprend une portée cylindrique 73. La portée cylindrique 73 présente une surface annulaire 71 entourée extérieurement par le dispositif d'étanchéité 1. Le dispositif d'étanchéité 1 comprend essentiellement une bague 10 et un carter 20. Le carter 20 comporte une portion cylindrique 22 et une portion radiale 24. En variante, le carter 20 pourrait comprendre en outre une vrille annulaire reliée à la portion radiale 24. La portion cylindrique 22 s'étend suivant la direction longitudinale X autour de la bague 10. Perpendiculairement à la direction longitudinale X, la portion cylindrique 22 est disposée entre la bague 10 et la paroi de séparation 92. Le carter 20 est fixé à la paroi de séparation 92. Des joints toriques assurent l'étanchéité entre la portion cylindrique 22 et la paroi de séparation 92. La portion radiale 24 présente une surface de contact 23 s'étendant perpendiculairement à la direction longitudinale X.

La bague 10 présente une forme annulaire centrée sur l'axe de révolution 100. La bague 10 comprend une lèvre d'étanchéité principale 12 et une lèvre secondaire d'étanchéité 14. La lèvre d'étanchéité principale 12 présente une surface interne 11. La surface interne 11 de la lèvre d'étanchéité est en regard de la surface annulaire 71. La surface interne 11 de la lèvre d'étanchéité principale 12 est sensiblement en contact avec la surface annulaire 71. La lèvre d'étanchéité secondaire 14 comporte une surface radiale 13 s'étendant perpendiculairement à la direction longitudinale X.

La bague 10 est maintenue suivant la direction longitudinale X par rapport au carter 20 entre la portion radiale 24 et une extrémité opposée formée par un jonc d'arrêt 26 maintenu dans la portion cylindrique 22 par un anneau élastique. Des ressorts de compression 32 sont répartis autour de l'axe de révolution 100 et s'étendent suivant la direction longitudinale X entre le jonc d'arrêt 26 et des cavités réalisées dans la bague 10. Les ressorts de compressions 32 sollicitent la bague 10 suivant la direction longitudinale X, afin de presser la surface radiale 13 de la bague 10 contre la surface de contact 23 du carter 20.

Des pions peuvent être prévus pour empêcher la rotation de la bague 10 autour de l'axe de révolution 100 par rapport au carter 20.

La bague 10 est de préférence réalisée en carbone et le carter 20 est de préférence réalisé en acier.

Le dispositif d'étanchéité 10 présente en outre des passages de fuite 30 s'étendant entre la bague 10 et le carter 20. Le nombre de passage de fuite 30 est de préférence compris entre 3 et 15. Dans les modes de réalisation illustrés, le dispositif d'étanchéité comprend douze passages de fuite. La section totale des passages de fuite 30 est de préférence comprise entre 0,5 mm² et 10 mm². Les passages de fuite 30 s'étendent de préférence perpendiculairement à la direction longitudinale X, radialement à l'axe de révolution 100.

Dans les modes de réalisation illustrés, les passages de fuite 30 sont formés par des rainures 15 réalisées dans la lèvre d'étanchéité secondaire 14. Les rainures 15 présentent chacune une profondeur p, selon la direction longitudinale X, comprise entre 0,1 mm et 1 mm. Il est prévu une usure axiale maximale de la lèvre d'étanchéité secondaire 14 pouvant atteindre 50 µm suivant la direction longitudinale X. Les rainures 15 s'étendent de préférence sur une largeur l comprise entre 0,5 mm et 5 mm. Les rainures 15 présentent, perpendiculairement à l'axe de révolution 100, de préférence une section rectangulaire telle que illustrée aux figures 4 et 5, semi-circulaire telle que illustrée à la figure 6, triangulaire telle que illustrée à la figure 7 ou ondulée, tel un festonnage tel qu'illustré à la figure 8.

Dans le mode de réalisation illustré à la figure 4, la bague 10 comprend une pluralité de segments 16, plus précisément trois segments dans le mode de réalisation illustré. Un ressort annulaire 19, maintenu dans une gorge exerce une pression sur les segments 16 tendant à appliquer la surface interne 11 sur la surface annulaire 71 du premier arbre de liaison 72. Chaque segment 16 comprend à ses extrémités une première portion de recouvrement 17 et une deuxième portion de recouvrement 18 s'étendant en biais. La première portion de recouvrement 17 d'un segment coopère avec la deuxième portion de recouvrement 18 d'un segment 16 adjacent pour former une étanchéité tertiaire. Dans le mode de réalisation illustré à la figure 4, le dispositif d'étanchéité 1 est formé par un joint radial segmenté. En variante, le dispositif d'étanchéité 1 pourrait notamment être formé par un joint fragmenté ou un joint radial segmenté Arch-bound.

Dans le deuxième mode de réalisation illustré à la figure 9, la bague 10 est une bague annulaire monobloc, dite bague flottante.

Bien entendu la divulgation n'est nullement limitée aux modes de réalisation décrits à titre illustratif, non limitatif. Ainsi, bien que cela ne soit pas préféré, la rainure 15 pourrait être réalisée alternativement ou également (de manière complémentaire) sur la surface radiale 13 du carter 20.

## Revendications

1. Dispositif d'étanchéité (1), en particulier pour turbomachine (50), destiné à assurer l'étanchéité entre un premier logement (2) et d'un deuxième logement (4), ledit dispositif d'étanchéité comprenant :
une bague (10), la bague présente une forme sensiblement annulaire s'étendant autour d'un axe de révolution (100) s'étendant suivant une direction longitudinale (X), la bague (10) comprend une lèvre d'étanchéité principale (12) et une lèvre d'étanchéité secondaire (14), la lèvre d'étanchéité principale présente une surface interne (11) configurée pour venir radialement au contact d'une surface annulaire (71) d'un arbre (72), la lèvre d'étanchéité secondaire (14) présente une surface radiale (13) s'étendant perpendiculairement à la direction longitudinale (X), et
un carter (20), le carter (20) est configuré pour être maintenu de manière étanche par rapport à une paroi de séparation (92), le carter (20) comprend une portion cylindrique (22) et une portion radiale (24), la portion cylindrique (22) s'étend suivant la direction longitudinale (X) autour de la bague (10), la portion radiale (24) présente une surface de contact (23) s'étendant perpendiculairement à la direction longitudinale (X), la bague (10) est sollicitée pour appliquer la surface radiale (13) de la lèvre d'étanchéité secondaire (14) contre la surface de contact (23) du carter (20),
dans lequel le dispositif d'étanchéité (1) présente au moins un passage de fuite (30) formant communication entre le premier logement (2) et le deuxième logement (4), **caractérisé en ce que** l'au moins un passage de fuite (30) s'étendant entre la lèvre d'étanchéité secondaire (14) et la surface radiale (13) du carter (20).

2. Dispositif d'étanchéité selon la revendication 1 dans lequel la bague (10) présente au moins une rainure (15) formée dans la lèvre d'étanchéité secondaire (14) et formant l'au moins un passage de fuite (30).

3. Dispositif d'étanchéité selon l'une quelconque des revendications précédentes dans lequel la bague (10) comprend une pluralité de segments (16) formant chacun une portion de cercle.

4. Dispositif d'étanchéité selon l'une quelconque des revendications précédentes dans lequel l'au moins un passage de fuite (30) présente une profondeur (p) comprise entre 0,1 et 1 mm suivant la direction longitudinale (X).

5. Dispositif d'étanchéité selon l'une quelconque des revendications précédentes dans lequel l'au moins un passage de fuite (30) s'étend perpendiculairement à la direction longitudinale (X).

6. Dispositif d'étanchéité selon l'une quelconque des revendications précédentes dans lequel l'au moins un passage de fuite (30) présente une section rectangulaire.

7. Dispositif d'étanchéité selon l'une quelconque des revendications 1 à 5 dans lequel l'au moins un passage de fuite (30) présente une section semi-circulaire.

8. Dispositif d'étanchéité selon l'une quelconque des revendications 1 à 5 dans lequel l'au moins un passage de fuite (30) présente une section triangulaire.

9. Dispositif d'étanchéité selon l'une quelconque des revendications 1 à 5 dans lequel l'au moins un passage de fuite (30) présente une section ondulée.

10. Turbomachine (50) comprenant le dispositif d'étanchéité (1) selon l'une quelconque des revendications 1 à 9.

## Patentansprüche

1. Dichtungsvorrichtung (1), insbesondere für eine Turbomaschine bzw. ein Turbotriebwerk (50), zum Sicherstellen einer Abdichtung zwischen einer ersten Aufnahme (2) und einer zweiten Aufnahme (4), wobei die Dichtungsvorrichtung umfasst:
einen Ring (10), wobei der Ring eine im Wesentlichen ringförmige Gestallt aufweist, die sich um eine entlang einer Längsrichtung (X) verlaufende Drehachse (100) erstreckt, wobei der Ring (10) eine primäre Dichtlippe (12) und eine sekundäre Dichtlippe (14) aufweist, wobei die primäre Dichtlippe eine Innenfläche (11) aufweist, die dazu ausgelegt ist, radial an einer ringförmigen Fläche (71) einer Welle (72) anzuliegen, wobei die sekundäre Dichtlippe (14) eine radiale Fläche (13) aufweist, die senkrecht zur Längsrichtung (X) verläuft, und
ein Gehäuse (20), wobei das Gehäuse (20) dazu ausgelegt ist, gegenüber einer Trennwand (92) abgedichtet gehalten zu werden, wobei das Gehäuse (20) einen zylindrischen Abschnitt (22) und einen radialen Abschnitt (24) umfasst, wobei der zylindrische Abschnitt (22) sich entlang der Längsrichtung (X) um den Ring (10) herum erstreckt, wobei der radiale Abschnitt (24) eine Kontaktfläche (23) aufweist, die sich senkrecht zur Längsrichtung (X) erstreckt, wobei der Ring (10) beaufschlagt wird, um die die radiale Fläche (13) der sekundären Dichtlippe (14) an die Kontaktfläche (23) des Gehäuses (20) anzudrücken,
wobei die Dichtungsvorrichtung (1) zumindest einen Leckagekanal (30) aufweist, der eine Verbindung zwischen der ersten Aufnahme (2) und der zweiten Aufnahme (4) herstellt,
**dadurch gekennzeichnet, dass** der zumindest eine Leckagekanal (30) sich zwischen der sekundären Dichtlippe (14) und der radialen Fläche (13) des Gehäuses (20) erstreckt.

2. Dichtungsvorrichtung nach Anspruch 1,
wobei der Ring (10) zumindest eine in der sekundären Dichtlippe (14) ausgebildete Nut (15) aufweist, die den zumindest einen Leckagekanal (30) bildet.

3. Dichtungsvorrichtung nach einem der vorhergehenden Ansprüche,
wobei der Ring (10) eine Vielzahl von Segmenten (16) enthält, die jeweils einen Kreisabschnitt bilden.

4. Dichtungsvorrichtung nach einem der vorhergehenden Ansprüche,
wobei der zumindest eine Leckagekanal (30) eine Tiefe (p) zwischen 0,1 und 1 mm entlang der Längsrichtung (X) aufweist.

5. Dichtungsvorrichtung nach einem der vorhergehenden Ansprüche,
wobei der zumindest eine Leckagekanal (30) senkrecht zur Längsrichtung (X) verläuft.

6. Dichtungsvorrichtung nach einem der vorhergehenden Ansprüche,
wobei der zumindest eine Leckagekanal (30) einen rechteckförmigen Querschnitt aufweist.

7. Dichtungsvorrichtung nach einem der Ansprüche 1 bis 5,
wobei der zumindest eine Leckagekanal (30) einen halbkreisförmigen Querschnitt aufweist.

8. Dichtungsvorrichtung nach einem der Ansprüche 1 bis 5,
wobei der zumindest eine Leckagekanal (30) einen dreieckförmigen Querschnitt aufweist.

9. Dichtungsvorrichtung nach einem der Ansprüche 1 bis 5,
wobei der zumindest eine Leckagekanal (30) einen gewellten Querschnitt aufweist.

10. Turbomaschine bzw. Turbotriebwerk (50) mit der Dichtungsvorrichtung (1) nach einem der Ansprüche 1 bis 9.

## Claims

1. A sealing device (1), in particular for a turbomachine (50), intended to ensure the sealing between a first housing (2) and a second housing (4), said sealing device comprising:
a ring (10), the ring presents a substantially annular form extending around an axis of revolution (100) extending along a longitudinal direction (X), the ring (10) comprises a main sealing lip (12) and a secondary sealing lip (14), the main sealing lip presents an inner surface (11) configured to come into contact radially with an annular surface (71) of a shaft (72), the secondary sealing lip (14) presents a radial surface (13) extending perpendicularly to the longitudinal direction (X), and
a casing (20), the casing (20) is configured to be sealingly maintained in relation to a separation wall (92), the casing (20) comprises a cylindrical portion (22) and a radial portion (24), the cylindrical portion (22) extends along the longitudinal direction (X) around the ring (10), the radial portion (24) presents a contact surface (23) extending perpendicularly to the longitudinal direction (X), the ring (10) being biased so as to apply the radial surface (13) of the secondary sealing lip (14) against the contact surface (23) of the casing (20),
wherein the sealing device (1) presents at least one leakage path (30) forming a communication between the first housing (2) and the second housing (4), **characterized in that** the at least one leakage path (30) extending between the secondary sealing lip (14) and the radial surface (13) of the casing (20).

2. The sealing device according to claim 1 wherein the ring (10) presents at least one groove (15) formed in the secondary sealing lip (14) and forming the at least one leakage path (30).

3. The sealing device according to any one of the previous claims, wherein the ring (10) comprises a plurality of segments (16), each forming a portion of a circle.

4. The sealing device according to any one of the previous claims, wherein the at least one leakage path (30) presents a depth (p) of between 0.1 and 1 mm along the longitudinal direction (X).

5. The sealing device according to any one of the previous claims, wherein the at least one leakage path (30) extends perpendicularly to the longitudinal direction (X).

6. The sealing device according to any one of the previous claims, wherein the at least one leakage path (30) presents a rectangular cross-section.

7. The sealing device according to any one of claims 1 to 5, wherein the at least one leakage path (30) presents a semi-circular cross-section.

8. The sealing device according to any one of claims 1 to 5, wherein the at least one leakage path (30) presents a triangular cross-section.

9. The sealing device according to any one of claims 1 to 5, wherein the at least one leakage path (30) presents a wavy undulated cross-section.

10. A turbomachine (50) comprising the sealing device (1) according to any one of claims 1 to 9.
